# FASCICULE DE BREVET EUROPEEN

(11) **EP 2 590 829 B1**
(45) Date de publication et mention de la délivrance du brevet: **13.01.2016**
(21) Numéro de dépôt: 11743297.1
(22) Date de dépôt: 05.07.2011
(51) Int. Cl.: B60C 23/04, B29D 30/00

(54) **PNEUMATIQUE DE VEHICULE COMPRENANT UN TRANSPONDEUR A RADIOFREQUENCE**
FAHRZEUGREIFEN MIT HF-TRANSPONDER
VEHICLE TYRE COMPRISING A RADIO FREQUENCY TRANSPONDER

(30) Priorité: 08.07.2010 FR 1055581
(43) Date de publication de la demande: 15.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BATTOCCHIO, Claudio, F-63040 Clermont-Ferrand Cedex 9 (FR)
(74) Mandataire: Dequire, Philippe Jean-Marie Denis
(86) Numéro de dépôt international: PCT/FR2011/051591
(87) Numéro de publication internationale: WO 2012/004521

(56) Documents cités:
- EP-A1- 1 049 196
- WO-A2-02/07993
- JP-A- 2004 013 449
- US-A1- 2006 164 250

## Description

L'invention concerne les pneumatiques de roue de véhicule.

Il est connu par exemple du document EP-1 977 912 de placer dans un pneumatique de roue de véhicule un transpondeur à identification par radiofréquence, également appelé radio-étiquette ou étiquette RFID (pour l'anglais *radio frequency identification* ou identification par radiofréquence). Le transpondeur est disposé dans un des deux flancs latéraux du pneumatique. On peut y enregistrer des informations, notamment relatives à la fabrication du pneumatique, qui peuvent ensuite être lues à distance à différents stades de l'utilisation et de la vie du pneumatique au moyen d'un lecteur adapté. Il est donc important de pouvoir lire facilement et en toutes circonstances les informations comprises dans le transpondeur. Or, il s'avère que cette lecture est parfois difficile à réaliser, le lecteur devant être placé très près du pneumatique pour que la communication puisse se faire. Il s'agit d'une difficulté notamment lorsque le pneumatique fait partie d'une roue déjà montée sur un véhicule.

Le document US 2006/164250 A1 mentionne également d'ajouter un transpondeur à une ébauche de pneumatique.

Un but de l'invention est de faciliter l'interaction avec un transpondeur d'un pneumatique de roue de véhicule.

A cet effet, on prévoit selon l'invention un pneumatique de véhicule, qui comprend :
- une masse de gomme présentant une zone de jonction en direction circonférentielle sur une face interne du pneumatique, et
- un transpondeur à radiofréquence formant un angle supérieur ou égal à 90° avec la zone de jonction autour d'un axe principal du pneumatique.

Les inventeurs ont en effet examiné si une corrélation existait entre la position du transpondeur repéré par rapport à un point singulier du pneumatique et la qualité de la communication avec le transpondeur. Ils ont alors eu la surprise de constater qu'une telle corrélation existait effectivement si l'on repérait la position du transpondeur par rapport à la zone de jonction de la gomme sur elle-même en direction circonférentielle sur la face interne du pneumatique. Cette zone de soudure de la gomme sur elle-même est aisément repérable à la vue comme au toucher sur la plupart des pneumatiques. Il est même pris en compte classiquement lors du positionnement des différentes couches de gomme et d'autres constituants du pneumatique lors de la réalisation de ce dernier, en particulier lors de la construction de l'ébauche. On constate que la communication à distance avec le transpondeur se fait beaucoup mieux lorsque l'angle précité est supérieur ou égal à 90° que lorsqu'il est inférieur à cette valeur. En particulier, on constate que la lecture peut se faire alors à une plus grande distance du pneumatique. Ce résultat inattendu permet de positionner les transpondeurs au sein des pneumatiques en améliorant le niveau garanti pour la qualité des communications avec le transpondeur.

De préférence, l'angle est supérieur ou égal à 135°, notamment supérieur à 150°, et de préférence égal à 180°.

Cette dernière valeur correspond en effet à la position du transpondeur qui permet la communication à la plus grande distance.

De préférence, le transpondeur est en contact avec un flanc du pneumatique portant des inscriptions donnant des informations sur le pneumatique.

En effet, on a également observé que la lecture du transpondeur pouvait avoir lieu à plus grande distance si le transpondeur était porté par le flanc portant le DOT (Departement of Transportation : marquage réglementaire relatif entre autres à l'usine et à la date de fabrication du pneumatique) que s'il était porté par l'autre flanc.

On prévoit également selon l'invention un ensemble de plusieurs pneumatiques, dans lequel les deux pneumatiques ou au moins deux des pneumatiques, de préférence tous les pneumatiques, sont conformes à l'invention.

On prévoit aussi selon l'invention un véhicule qui comprend au moins deux pneumatiques selon l'invention, de préférence tous les pneumatiques du véhicule étant conformes à l'invention.

On prévoit également selon l'invention une ébauche crue de pneumatique de véhicule, qui comprend :
- une masse de gomme présentant une zone de jonction en direction circonférentielle sur une face interne de l'ébauche, et
- un transpondeur à radiofréquence formant un angle supérieur ou égal à 90° avec la zone de jonction autour d'un axe principal de l'ébauche.

On prévoit aussi selon l'invention un ensemble de plusieurs ébauches crues de pneumatique, dans lequel les deux ébauches ou au moins deux des ébauches, de préférence toutes les ébauches, sont conformes à l'invention.

On prévoit encore selon l'invention un procédé de fabrication d'une ébauche crue de pneumatique de véhicule ou d'un pneumatique de véhicule, dans lequel on place un transpondeur à radiofréquence sur une masse de gomme de sorte que le transpondeur forme un angle supérieur ou égal à 90° avec une zone de jonction de la gomme en direction circonférentielle sur une face interne de l'ébauche ou du pneumatique autour d'un axe principal de l'ébauche ou du pneumatique.

En effet, on peut prévoir que le transpondeur occupe la position précitée lorsque le transpondeur est placé dans l'ébauche servant à fabriquer le pneumatique.

Avantageusement, on réalise de façon consécutive plusieurs ébauches ou plusieurs pneumatiques selon l'invention.

On prévoit également selon l'invention un procédé de traitement d'au moins un pneumatique de véhicule, dans lequel on fixe un transpondeur à radiofréquence à une masse de gomme cuite du pneumatique de sorte que le transpondeur forme un angle supérieur ou égal à 90° avec une zone de jonction de la gomme en direction circonférentielle sur une face interne du pneumatique autour d'un axe principal du pneumatique.

Ainsi, on peut également prévoir que le transpondeur est rapporté à un pneumatique déjà fabriqué. Il peut même s'agir d'un pneumatique ayant déjà servi, c'est-à-dire qui a déjà roulé avec un véhicule. On peut, même dans ce cas, améliorer la qualité de la communication à distance avec le transpondeur en plaçant ce dernier de façon adaptée sur le pneumatique.

Avantageusement, on traite plusieurs pneumatiques de façon consécutive conformément à l'invention.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue partielle en perspective d'un pneumatique selon l'invention ;
- la figure 2 est une vue en élévation de l'ébauche ayant servi à la fabrication du pneumatique de la figure 1 ;
- la figure 3 est une vue en perspective illustrant une étape de réalisation de l'ébauche de la figure 2 ;
- la figure 4 est une vue en élévation montrant une installation pour la réalisation de mesures expérimentales ;
- la figure 5 est un diagramme illustrant le résultat de ces mesures ; et
- la figure 6 est une vue schématique d'un véhicule équipé de pneumatiques selon l'invention.

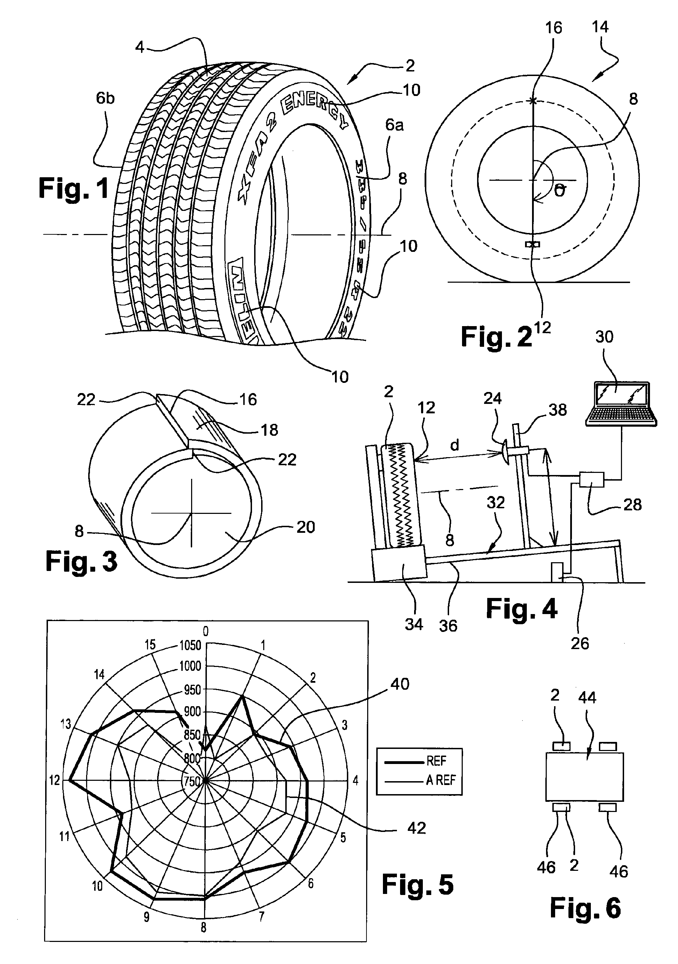

On a illustré à la figure 1 un pneumatique 2 selon l'invention pour roue de véhicule. Le véhicule peut être un véhicule de tourisme, un véhicule utilitaire, un véhicule de type poids lourd ou un engin de génie civil, et comprendre deux, trois, quatre roues ou davantage.

Le pneumatique 2 présente notamment une zone sommet 4 destinée à être en contact avec la route et deux flancs 6a et 6b formant des zones latérales. Le pneumatique comprend un axe principal 8. La zone sommet présente une face externe ayant une forme générale cylindrique par rapport à l'axe 8 tandis que les flancs 6a et 6b ont une forme annulaire généralement plane et perpendiculaire à cet axe.

Le pneumatique comprend de la gomme formée d'un mélange de différents constituants, notamment du caoutchouc naturel, du caoutchouc synthétique et des adjuvants chimiques (soufre, noir de carbone, huile, etc.). Il comprend aussi des câbles textiles et/ou métalliques.

Le flanc 6a visible sur la figure 1 est en l'espèce le côté référence et comprend le DOT, tandis que le flanc 6b est le côté anti-référence. Nous les désignerons respectivement comme « côté REF » et « côté AREF ». Le côté AREF 6b porte un matricule contenant un numéro de série unique qui permet de reconnaître le pneumatique. Les deux côtés comprennent différents marquages 10 formés en relief et/ou en creux dans la gomme et qui peuvent présenter par exemple tout ou partie des informations suivantes :
- une marque associée au pneumatique ;
- le type de pneumatique ;
- une largeur du flanc, en millimètres ;
- l'indication « tubeless » (TL), indiquant que le pneumatique est dépourvu de chambre à air ;
- l'indice de charge ;
- l'indice de vitesse ;
- le facteur de forme ;
- la lettre « R » indiquant que le pneumatique a une structure radiale ;
- le nom du manufacturier ; et
- le diamètre du seat du pneumatique.

Le pneumatique 2 comprend un transpondeur ou étiquette à identification par radiofréquence 12. Ce transpondeur a été incorporé au pneumatique à l'occasion de la fabrication de l'ébauche 14 illustrée à la figure 2 et, par exemple, de la façon décrite dans le document EP-1 977 912 auquel il est renvoyé pour plus d'explications.

Le transpondeur 12 est d'un type connu en lui-même et est composé d'une puce à semi-conducteur et d'une antenne. Un lecteur est apte à lire et écrire des données dans la puce. La communication et l'alimentation du transpondeur se font par radiofréquence. Pour cela, un lecteur spécialement adapté à cette fin envoie une requête au transpondeur qui se trouve dans le champ du lecteur et le transpondeur lui répond immédiatement, le tout se faisant selon un protocole de communication prédéterminé. La puce électronique est dotée d'une mémoire dans laquelle le lecteur peut, selon les cas, lire ou écrire des données. Pour cela, le lecteur émet des ondes radio puis écoute la ou les réponses fournies par le transpondeur qui se trouve dans son champ de lecture. Le transpondeur 12 est en l'espèce destiné à une communication par ondes radio mais on pourrait prévoir qu'il est apte à une communication par champ électromagnétique. Le transpondeur est par exemple prévu pour communiquer aux fréquences de 869 MHz et/ou 915 MHz. Il est à polarisation linéaire en l'espèce.

Il s'agit en l'espèce d'un transpondeur passif, donc ne comprenant pas de moyens autonomes d'alimentation en courant électrique. Le transpondeur n'est alimenté que lorsqu'il reçoit des ondes électromagnétiques d'un lecteur, ces ondes induisant un courant dans l'antenne du transpondeur afin de l'alimenter en énergie. La récupération d'énergie se fait ainsi au travers de l'antenne du transpondeur constituée d'un dipôle qui met à disposition une tension alternative induite à ses bornes, tension qui doit être redressée, filtrée et réglée pour alimenter le reste du circuit intégré du transpondeur.

En l'espèce, il s'agit d'un transpondeur à lectures et écritures multiples. Il est monté vierge dans l'ébauche 14 du pneumatique 2 et pourra ensuite plusieurs fois recevoir des données en écriture, réaliser une modification de ces données, réaliser un effacement de ces données, réaliser un ajout de données et être lu.

Néanmoins, on pourrait prévoir un transpondeur d'un autre type, par exemple un transpondeur avec lequel l'écriture est possible une seule fois et la lecture plusieurs fois. Dans ce cas, le transpondeur est livré vierge, puis fait l'objet d'une phase d'écriture unique par le fabricant du pneumatique. Une fois cette phase d'écriture effectuée, le transpondeur tombe en mode de lecture seule et l'écriture de données n'est plus possible. Seule est possible la lecture des données enregistrées dans le transpondeur.

Le transpondeur peut comprendre par exemple tout ou partie des données suivantes :
- le code manufacturier, le code article et le numéro de série du pneumatique ;
- la position du pneu sur le véhicule ;
- le kilométrage véhicule relevé lors de la dernière inspection...

On met en place le transpondeur 12 dans le flanc 6a de préférence plutôt que dans le flanc 6b. La qualité des communications avec le transpondeur est en effet meilleure lorsqu'il est porté par le côté REF. Cette différence de comportement entre les deux flancs résulte du mode de cuisson de l'ébauche du pneumatique. En effet, le flanc 6a vient d'abord en contact avec la face inférieure de la presse servant à mouler et cuire le pneumatique dès que l'ébauche est placée dans le moule. Cette face inférieure est la plus chaude. Le flanc 6a commence donc à cuire avant la fermeture du moule et plus tôt que l'autre flanc 6b. La même dissymétrie se produit à l'ouverture du moule sachant que le flanc 6b est placé en contact avec l'air ambiant à l'ouverture du moule tandis que le flanc 6a est toujours au contact de la presse.

Par ailleurs, on distingue sur l'ébauche et le pneumatique la zone singulière 16 formée par la zone de soudure de la gomme intérieure 18 sur elle-même en direction circonférentielle par référence à l'axe 8. On a illustré de façon schématique à la figure 3 la mise en place de la couche de gomme intérieure de l'ébauche sur un tambour de formage 20. Cette couche est destinée à assurer l'étanchéité à l'air de la chambre définie par la face interne du pneumatique. Elle présente ici deux bords rectilignes perpendiculaires à sa direction longitudinale lorsqu'elle s'étend à plat. La couche 18 est mise en place sur le tambour en superposant l'un sur l'autre, suivant la direction radiale à l'axe 8, ses deux bords 22. On forme donc une zone de recouvrement et de jonction en direction circonférentielle. On réalise ainsi une légère surépaisseur à cette zone de jonction, garante d'une bonne étanchéité et qui a la forme générale d'une ligne ou d'un cordon. Cette ligne ou ce cordon apparaît sur la face interne de l'ébauche crue ou sur celle du pneumatique, y compris sur la face interne des flancs 6a et 6b.

En observant le pneumatique ou l'ébauche avec le flanc 6a de face comme sur la figure 2, on désigne par θ l'angle formé autour de l'axe 8 d'une part par la demi-droite partant de cet axe et passant par la zone de jonction 16 sur le flanc, et la demi-droite partant du même axe et passant par la position du transpondeur 12. On considère ici des valeurs d'angle en valeur absolue et non pas algébriques. En d'autres termes, on mesure l'angle θ dans le sens horaire ou dans le sens anti-horaire indifféremment.

On installe le transpondeur de sorte que l'angle θ soit supérieur à 90° et même à 135°, à 150° et à 170°. On le place en l'espèce de sorte que l'angle θ vaut 180° si bien que le transpondeur 12 est diamétralement opposé à la soudure 16 par rapport à l'axe 8 lorsque le flanc 6a est observé de face. On garantit ainsi une bonne qualité de communication par radio à distance avec le transpondeur pour l'inscription et la lecture de données.

On a illustré à la figure 4 une partie d'une installation servant à mettre en avant la corrélation entre la valeur de l'angle θ et la qualité de la communication à distance avec le transpondeur. On utilise en l'espèce un lecteur de transpondeur 28 commercialisé par la société Siemens sous la référence Simatic RF660R et une antenne commercialisée par la société Intermec, fonctionnant dans la bande de fréquences 865-928 MHz et ayant une impédance nominale de 50 Ohms, un gain de 6 dBi et une polarisation linéaire. L'antenne est utilisée en tant qu'antenne émettrice. On utilise par ailleurs pour la réception une antenne commercialisée par la société Siemens sous la référence Simatic RF660A, fonctionnant dans la bande de fréquences 865-928 MHz, ayant une impédance nominale de 50 Ohms et un gain de 5 à 7 dBi avec une polarisation circulaire et un angle d'émission/réception compris entre 55 et 60°. Les deux antennes 24 et 26 sont reliées via deux liaisons séparées au lecteur 28 qui est lui-même relié à un ordinateur 30 assurant l'acquisition des données via une liaison Ethernet.

On utilise un banc de mesure 32 comprenant un support 34 pour le pneumatique 2, un rail métallique 36 s'étendant parallèlement à l'axe 8 et à distance de ce dernier, et un mât 38 perpendiculaire à l'axe 8 et au rail 36 et monté coulissant à sa base sur le rail par des moyens adaptés.

On a en l'espèce installé plusieurs transpondeurs 12 dans un même pneumatique 2. Les transpondeurs sont en l'espèce au nombre de seize. Ils se situent tous à la même distance de l'axe 8 dans le flanc 6a et sont régulièrement espacés autour de l'axe. L'un d'eux se situe entre l'axe 8 et la zone 16. Un autre est diamétralement opposé à la zone 16.

Le pneumatique est disposé de sorte que le transpondeur considéré 12 s'étend en position haute, c'est-à-dire à la verticale de l'axe 8 et au-dessus de ce dernier. On place l'antenne 24 à la même hauteur que le transpondeur, le rail 36 servant de référence de hauteur. Au cours de l'expérience, on mesure au moyen d'un télémètre la distance d séparant l'antenne 24 et la face externe du flanc 6a au droit du transpondeur.

L'autre antenne 26 est quant à elle positionnée au sol sur un morceau de mousse et dirigée vers le pneumatique. Elle se situe à une distance d'au moins 35 centimètres du pneumatique, ce qui est environ la longueur d'onde du signal transmis. L'ensemble de l'expérimentation se déroule dans une chambre anéchoïque, à savoir une salle dont les parois absorbent les ondes sonores ou électromagnétiques.

On utilise le protocole de mesure suivant :
- on place le centre de l'antenne émettrice 24 à la hauteur du transpondeur considéré;
- on place l'antenne émettrice contre le flanc 6a en rapprochant le mât 38 du pneumatique par coulissement sur le rail 36 et on fait le zéro au niveau du télémètre qui sert à mesurer la distance d ;
- on observe qu'on reçoit bien le signal du transpondeur considéré au niveau du.. lecteur 38 et on vérifie l'identité du transpondeur depuis l'ordinateur 30;
- on recule progressivement l'antenne 24 à allure modérée en faisant coulisser le mât 38 sur le rail 36, et ce jusqu'à la perte du signal ;
- on rapproche ensuite à nouveau l'antenne du pneumatique jusqu'à retrouver le signal et on recherche ainsi par tâtonnement la distance maximale d qui permet la la lecture du transpondeur par le lecteur 28 ;
- on immobilise alors l'antenne et on relève à l'aide du télémètre la distance obtenue.

On a fait figurer sur le diagramme de la figure 5 les distances ainsi obtenues pour chacun des 16 transpondeurs du flanc REF 6a du pneumatique, Les valeurs sont reliées par la courbe 40. Une expérimentation analogue a été effectuée en plaçant seize autres transpondeurs dans l'autre flanc 6b, ce qui a conduit à la courbe 42. Pour mieux observer les différences de lecture, le centre du diagramme correspond à la distance de 750 millimètres, les distances indiquées en direction radiale augmentant par pas de 50 millimètres jusqu'à 1050 millimètres.

Sur la courbe 40, pour 1 W de puissance, la distance la plus courte est de 820 millimètres et correspond au cas où le transpondeur est situé dans l'alignement de l'axe 8 et de la ligne de soudure 16, entre ceux-ci. C'est donc dans cette position du transpondeur, la plus proche de la zone 16 que la lecture est la plus difficile. En d'autres termes, il faut être alors particulièrement près du transpondeur pour effecteur une lecture correcte des données qu'il renferme. A l'inverse, on obtient de bons résultats de lecture lorsque le transpondeur est positionné de sorte que l'angle θ est supérieur à 90°. Ainsi, dans la position du transpondeur illustrée à la figure 2, on obtient une distance d de 1 mètre.

La courbe 42 correspondant au flanc AREF 6b a une allure générale proche de celle de la courbe 40. Toutefois, les distances obtenues sont globalement plus faibles que celles de la courbe 40, de sorte qu'il est préférable de positionner le transpondeur sur le flanc 6a.

Le diagramme de la figure 5 résulte des mesures faites sur un pneumatique dotés de seize transpondeurs 12 sur le flanc 6a et de seize transpondeurs 12 sur le flanc 6b. La répétition de l'expérimentation sur de nombreux pneumatiques similaires conduit à un lissage de la courbe formant la moyenne des courbes, qui montre que le meilleur positionnement correspond au bas de la courbe et donc à des valeurs de θ proches de 180°. La courbe moyenne a l'allure générale d'une cardioïde, la partie rentrée et le point singulier de la cardioïde correspondant à la position de transpondeur la plus proche de la zone de soudure. En d'autres termes, le plus sûr est de placer le transpondeur sur le flanc 6a en le situant le plus loin possible de la zone de soudure 16.

Dans le mode de réalisation décrit plus haut, on place un unique transpondeur 12 dans l'ébauche 14 du pneumatique comprenant de la gomme crue, avant donc la cuisson de cette ébauche pour la vulcanisation de la gomme. Le transpondeur est placé dans l'épaisseur du flanc ou sur une face interne ou externe de ce dernier. On peut mettre en place le transpondeur sous la forme d'un composant comprenant au moins deux fines épaisseurs de gomme crue isolante entre lesquelles est interposé et enfermé le transpondeur. La gomme du composant est fixée à la gomme crue de l'ébauche, entre deux couches de celle-ci, puis solidarisée à cette dernière à l'occasion de la cuisson de l'ébauche.

On peut néanmoins mettre en oeuvre l'invention en rapportant un unique transpondeur 12 sur un pneumatique 2 déjà cuit, voire déjà utilisé. Il peut s'agir par exemple d'un pneumatique monté sur une roue d'un véhicule et qui a déjà roulé. La mise en place du transpondeur 12 sur un pneumatique peut donc se faire indépendamment de la fabrication de ce dernier. Elle peut se faire en particulier à l'occasion de la prise en charge d'un pneumatique déjà utilisé. On peut par exemple fixer le transpondeur sur la paroi interne du flanc 6a, voire sur sa paroi externe. On peut l'installer sur la zone désignée par le terme de « brandbox ». On peut, dans ce cadre, mettre en place le transpondeur 12 pris en sandwich entre deux gommes de liaison crues auto vulcanisantes.

On peut fabriquer de façon successive et consécutive plusieurs pneumatiques 2, par exemple au nombre de cinq, dix, cent ou davantage, de la façon qui vient d'être décrite. Tous les pneumatiques de cette série présentent donc un transpondeur 12 positionné avec un angle θ égal à 180° ou voisin de cette valeur.

Cette série permet de constituer une population de pneumatiques qui comprennent tous un transpondeur positionné de cette façon. On peut retrouver une telle population dans les stocks d'un fabricant de pneumatiques, ou d'un revendeur grossiste ou détaillant, ou encore dans les stocks d'un constructeur de véhicules. On peut aussi la retrouver au sein d'une flotte d'un exploitant utilisant un ensemble de véhicules tels que le véhicule 44 illustré à la figure 6. Dans une telle population, le taux de pneumatiques conformes à l'invention n'est pas nécessairement de 100 % mais est de préférence supérieur à 50 %, voire à 75 % ou 80 %.

De même, au sein d'un véhicule 44, on prévoit que tout ou partie des pneumatiques 2 du véhicule sont conformes à l'invention. Il peut s'agir de tous les pneumatiques du véhicule ou bien d'une majorité d'entre eux, typiquement au moins la moitié d'entre eux. De même, on prévoit selon l'invention que, sur un véhicule comprenant un ou plusieurs essieux 46, cet essieu ou au moins l'un des essieux porte des pneumatiques qui sont tous conformes à l'invention, même si ce n'est pas le cas d'un autre essieu du véhicule s'il existe. Le véhicule de la figure 6 comporte quatre roues réparties sur deux essieux. Mais l'invention est également utilisable pour des véhicules à deux, trois, quatre roues ou davantage et sur des véhicules à plus de deux essieux.

On observe ici que, abstraction faite du positionnement du transpondeur à l'égard de l'angle θ, l'invention n'implique aucun changement dans la fabrication du pneumatique ni dans les qualités et les performances générales de ce dernier.

On peut positionner le transpondeur de sorte qu'il se situe dans le flanc à une distance de 15 millimètres environ du cordon de centrage du pneumatique, mesuré en direction radiale à l'axe 8, et ce notamment lorsque le transpondeur est logé dans l'emplacement dénommé brandbox. Si le transpondeur se trouve du côté de la face interne du flanc 6a, on peut le positionner à une distance de 80 millimètres environ de l'arête du flanc du pneumatique, mesurée en direction radiale.

Bien entendu, on pourra apporter à l'invention de nombreuses modifications sans sortir du cadre de celle-ci.

On pourra mettre en oeuvre l'invention en installant le transpondeur 12 sur le flanc 6b correspondant au côté AREF.

Le pneumatique selon l'invention pourra présenter au moins deux transpondeurs disposés respectivement sur ses flancs 6a et 6b, chacun avec un angle θ supérieur à 90°. Ce mode de réalisation est intéressant lorsque le pneumatique peut être monté sur le véhicule sans considération d'un sens de pause, c'est-à-dire sans que le flanc 6a doive être orienté plutôt vers l'intérieur ou l'extérieur du véhicule. Quel que soit le sens de pause, on pourra donc lire le transpondeur se situant sur le flanc le plus visible et le plus accessible, et ce avec une bonne qualité de transmission.

## Revendications

1. Pneumatique (2) de véhicule, comprenant :
- une masse de gomme présentant une zone de jonction (16) en direction circonférentielle sur une face interne du pneumatique, et
- un transpondeur (12) à radiofréquence **caractérisé en ce que** le transpondeur à radiofréquence est en contact avec un flanc du pneumatique portant le DOT et des inscriptions donnant des informations sur le pneumatique et forme un angle (θ) égal à 180°avec la zone de jonction autour d'un axe de rotation (8) du pneumatique.

2. Ensemble de plusieurs pneumatiques (2), **caractérisé en ce que** les deux pneumatiques ou au moins deux des pneumatiques, de préférence tous les pneumatiques, sont conformes à au moins l'une quelconque des revendications précédentes.

3. Véhicule (44) **caractérisé en ce qu'**il comprend au moins deux pneumatiques (5) selon au moins l'une quelconque des revendications 1 à 2, de préférence tous les pneumatiques du véhicule étant conformes à au moins l'une quelconque des revendications 1 à 2.

4. Ébauche crue (14) de pneumatique de véhicule, comprenant :
- une masse de gomme présentant une zone de jonction (16) en direction circonférentielle sur une face interne de l'ébauche, et
- un transpondeur (12) à radiofréquence **caractérisé en ce que** le transpondeur à radiofréquence est en contact avec un flanc de l'ébauche destiné à porter le DOT et des inscriptions donnant des informations sur le pneumatique et forme un angle (θ) égal à 180° avec la zone de jonction autour d'un axe de rotation (8) de l'ébauche.

5. Ensemble de plusieurs ébauches crues (14) de pneumatique, **caractérisé en ce que** les deux ébauches ou au moins deux des ébauches, de préférence toutes les ébauches, sont conformes à la revendication précédente.

6. Procédé de fabrication d'une ébauche crue (14) de pneumatique de véhicule ou d'un pneumatique (2) de véhicule, **caractérisé en ce qu'**on place un transpondeur (12) à radiofréquence en contact avec un flanc de la gomme portant le DOT et des inscriptions de sorte que le transpondeur forme un angle (θ) égal à 180° avec une zone (16) de jonction de la gomme en direction circonférentielle sur une face interne de l'ébauche ou du pneumatique autour d'un axe de rotation (8) de l'ébauche ou du pneumatique.

7. Procédé dans lequel on réalise de façon consécutive plusieurs ébauches ou plusieurs pneumatiques selon le procédé de la revendication précédente.

8. Procédé de traitement d'au moins un pneumatique (2) de véhicule, **caractérisé en ce qu'**on fixe un transpondeur (12) à radiofréquence en contact avec un flanc d'une masse de gomme cuite du pneumatique portant le DOT et des inscriptions donnant des informations sur le pneumatique de sorte que le transpondeur forme un angle (θ) égal à 180° avec une zone de jonction (16) de la gomme en direction circonférentielle sur une face interne du pneumatique autour d'un axe de rotation (8) du pneumatique.

9. Procédé selon la revendication précédente dans lequel on traite plusieurs pneumatiques (2) de façon consécutive conformément à cette revendication.

## Patentansprüche

1. Fahrzeugreifen (2), der enthält:
- eine Gummimasse, die eine Verbindungszone (16) in Umfangsrichtung auf einer Innenseite des Reifens aufweist, und
- einen Hochfrequenz-Transponder (12),
**dadurch gekennzeichnet, dass** der Hochfrequenz-Transponder mit einer Flanke des Reifens in Kontakt steht, die die DOT-Nummer und Beschriftungen trägt, die Informationen über den Reifen liefern, und einen Winkel (θ) gleich 180° mit der Verbindungszone um eine Drehachse (8) des Luftreifens bildet.

2. Einheit aus mehreren Reifen (2), **dadurch gekennzeichnet, dass** die zwei Reifen oder mindestens zwei der Reifen, vorzugsweise alle Reifen, mindestens einem der vorhergehenden Ansprüche entsprechen.

3. Fahrzeug (44), **dadurch gekennzeichnet, dass** es mindestens zwei Reifen (5) gemäß mindestens einem der Ansprüche 1 bis 2 enthält, wobei vorzugsweise alle Reifen des Fahrzeugs mindestens einem der Ansprüche 1 bis 2 entsprechen.

4. Rohling (14) eines Fahrzeugreifens, der enthält:
- eine Gummimasse, die eine Verbindungszone (16) in Umfangsrichtung auf einer Innenseite des Rohlings aufweist, und
- einen Hochfrequenz-Transponder (12),
**dadurch gekennzeichnet, dass** der Hochfrequenz-Transponder mit einer Flanke des Rohlings in Kontakt steht, die dazu bestimmt ist, die DOT-Nummer und Beschriftungen zu tragen, die Informationen über den Reifen liefern, und einen Winkel (θ) gleich 180° mit der Verbindungszone um eine Drehachse (8) des Rohlings bildet.

5. Einheit aus mehreren Reifenrohlingen (14), **dadurch gekennzeichnet, dass** die zwei Rohlinge oder mindestens zwei der Rohlinge, vorzugsweise alle Rohlinge, dem vorhergehenden Anspruch entsprechen.

6. Verfahren zur Herstellung eines Fahrzeugreifenrohlings (14) oder eines Fahrzeugsreifens (2), **dadurch gekennzeichnet, dass** ein Hochfrequenz-Transponder (12) derart in Kontakt mit einer die DOT-Nummer und Beschriftungen tragenden Flanke des Gummis angeordnet wird, dass der Transponder einen Winkel (θ) gleich 180° mit einer Verbindungszone (16) des Gummis in Umfangsrichtung auf einer Innenseite des Rohlings oder des Reifens um eine Drehachse (8) des Rohlings oder des Reifens bildet.

7. Verfahren, bei dem nacheinander mehrere Rohlinge oder mehrere Reifen gemäß dem Verfahren des vorhergehenden Anspruchs hergestellt werden.

8. Verfahren zur Behandlung mindestens eines Fahrzeugreifens (2), **dadurch gekennzeichnet, dass** ein Hochfrequenz-Transponder (12) mit einer die DOT-Nummer und Beschriftungen tragenden Flanke einer vulkanisierten Gummimasse des Reifens derart in Kontakt befestigt wird, dass der Transponder einen Winkel (θ) gleich 180° mit einer Verbindungszone (16) des Gummis in Umfangsrichtung auf einer Innenseite des Reifens um eine Drehachse (8) des Reifens bildet.

9. Verfahren nach dem vorhergehenden Anspruch, wobei mehrere Reifen (2) nacheinander gemäß diesem Anspruch behandelt werden.

## Claims

1. Vehicle tyre (2), comprising:
- a rubber mass having a joining zone (16) in the circumferential direction on an inner face of the tyre, and
- a radiofrequency transponder (12);
**characterized in that** the radiofrequency transponder is in contact with a sidewall of the tyre supporting the DOT code and inscriptions giving information on the tyre and forms an angle (θ)equal to 180° with the joining zone about a main axis (8) of the tyre.

2. Set of several tyres (2), **characterized in that** the two tyres or at least two of the tyres, preferably all the tyres, conform to the preceding claim.

3. Vehicle (44) **characterized in that** it comprises at least two tyres (5) according to at least any one of Claims 1 and 2, preferably all the tyres of the vehicle conforming to at least any one of Claims 1 and 2.

4. Raw vehicle tyre preform (14), comprising:
- a rubber mass having a joining zone (16) in the circumferential direction on an inner face of the preform, and
- a radiofrequency transponder (12) **characterized in that** the radiofrequency transponder is in contact with a sidewall of the tyre supporting the DOT code and inscriptions giving information on the tyre and forms an angle (θ) greater equal to 180° with the joining zone about a main axis (8) of the preform.

5. Set of several raw tyre preforms (14), **characterized in that** the two preforms or at least two of the preforms, preferably all the preforms, conform to the preceding claim.

6. Method for manufacturing a raw vehicle tyre preform (14) or a vehicle tyre (2), **characterized in that** a radiofrequency transponder (12) is placed in contact with a sidewall of the rubber supporting the DOT code and inscriptions so that the transponder forms an angle (θ) equal to 180° with a joining zone (16) of the rubber in the circumferential direction on an inner face of the preform or of the tyre about a main axis (8) of the preform or of the tyre.

7. Method in which several preforms or several tyres are produced consecutively according to the method of the preceding claim.

8. Method for treating at least one vehicle tyre (2), **characterized in that** a radiofrequency transponder (12) is attached to a sidewall of a cured rubber mass of the tyre supporting the DOT code and inscriptions giving information on the tyre so that the transponder forms an angle (θ)equal to 180° with a joining zone (16) of the rubber in the circumferential direction on an inner face of the tyre about a main axis (8) of the tyre.

9. Method according to the preceding claim, in which several tyres (2) are treated consecutively according to this claim.
